# EUROPEAN PATENT APPLICATION

(11) **EP 4 651 089 A1**
(43) Date of publication of application: **19.11.2025**
(21) Application number: 25173739.1
(22) Date of filing: 30.04.2025
(51) Int. Cl.: G06T 13/60, G06T 15/50

(54) **IMAGE PROCESSING**

(30) Priority: 14.05.2024 GB 202406797
(71) Applicant: Sony Interactive Entertainment Inc., Tokyo 108-0075 (JP)
(72) Inventor: VILLANUEVA-BARREIRO, Marina, London, W1F 7LP (GB); SWANN, Andrew, London, W1F 7LP (GB); CRACIUN, Cristian, London, W1F 7LP (GB); PANESAR, Pritpal, London, W1F 7LP (GB); SUNDARAM, Chockalingam Ravi, London, W1F 7LP (GB); MOTILLA, Daniel, London, W1F 7LP (GB); NEDELCU, Radu-Andrei, London, W1F 7LP (GB)
(74) Representative: D Young & Co LLP

(57) **Abstract**

A data processing apparatus rendering circuitry to render content images for a virtual environment, and image processing circuitry to generate one or more output images in response to one or more of the content images, wherein the image processing circuitry is configured to input at least one 2D volumetric effect image and one or more of the content images to a neural style transfer "NST" model, the NST model being trained to generate one or more of the output images using the at least one 2D volumetric effect image as a style image.

## Description

### Field of the Disclosure

The present disclosure relates to the field of processing data. In particular, the present disclosure relates to apparatus, systems and methods for processing images.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior against the present disclosure.

The speed and realism with which a scene can be rendered is a key consideration in the field of computer graphics processing. When rendering images for virtual environments, volumetric effects such as fog, smoke, steam and so on may be rendered. Video graphics applications, such as video games, television shows and movies, sometimes use volumetric effects to model smoke, fog, or other fluid or particle interactions such as the flow of water or sand, or an avalanche or rockslide, or fire.

Rendering of fog, for example, typically requires a volumetric rendering approach involving simulation of a three-dimensional fog and sampling of the fog simulation followed by performing rendering operations using results of the sampling. Such volumetric effects may typically be part of a complex rendering pipeline, which may potentially be responsive to a topology of a rendered environment, the textures / colours of that environment, and the lighting of that environment, as well as the properties of the volumetric material itself. These factors may be combined within the operations for rendering the volumetric effect, and this can result in a significant computational cost to the system.

More generally, rendering of volumetric effects can potentially require burdensome processing. For interactive applications, such as video game applications and other similar applications, the associated time and processing constraints can present difficulties in rendering volumetric effects with acceptable quality.

It is in this context that the present disclosure arises.

Various aspects and features of the present disclosure are defined in the appended claims and within the text of the accompanying description. Example embodiments include at least a data processing apparatus, a method, a computer program and a machine-readable, non-transitory storage medium which stores such a computer program.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 is a schematic diagram illustrating an example of an entertainment device;
Figure 2a is a schematic diagram illustrating an example of a method for rendering images;
Figure 2b is a schematic diagram illustrating an example of a method for rendering a volumetric effect;
Figure 3 is a schematic diagram illustrating a data processing apparatus in accordance with embodiments of the disclosure;
Figure 4 is a schematic diagram illustrating selection of a neural style transfer (NST) model;
Figure 5 is a schematic diagram illustrating a generative adversarial network (GAN);
Figure 6 is a schematic diagram illustrating another data processing apparatus; and
Figure 7 is a schematic flowchart illustrating a method.

### DESCRIPTION OF THE EMBODIMENTS

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

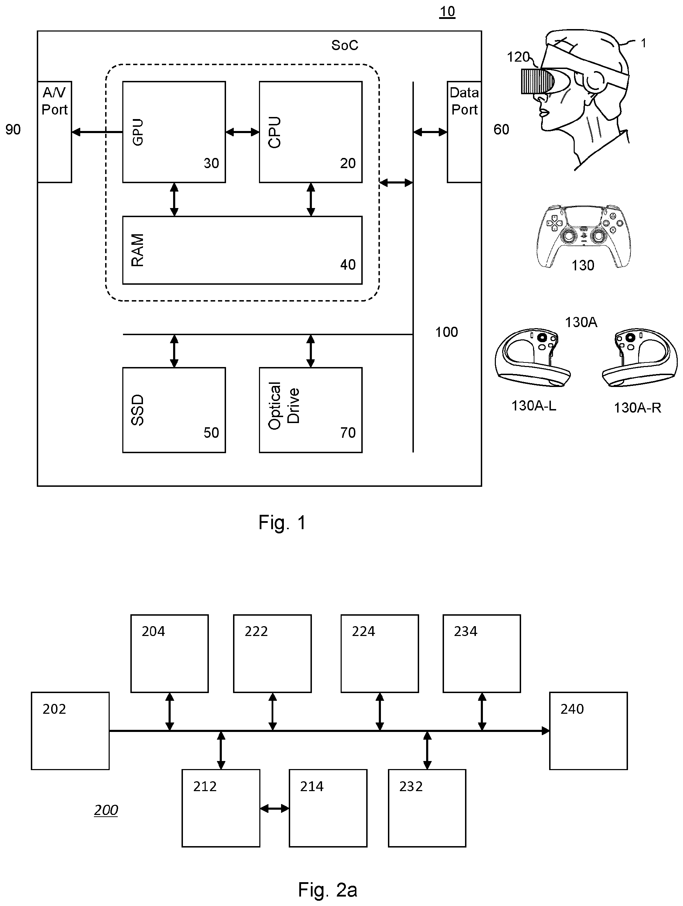

Referring now to the drawings, wherein like reference numerals designate identical or corresponding parts, Figure 1 shows an example of an entertainment device 10 which may be a computer or video game console, for example.

The entertainment device 10 comprises a central processor 20. The central processor 20 may be a single or multi core processor. The entertainment device also comprises a graphical processing unit or GPU 30. The GPU can be physically separate to the CPU, or integrated with the CPU as a system on a chip (SoC).

The GPU, optionally in conjunction with the CPU, may process data and generate video images (image data) and optionally audio for output via an AV output. Optionally, the audio may be generated in conjunction with or instead by an audio processor (not shown).

The video and optionally the audio may be presented to a television or other similar device. Where supported by the television, the video may be stereoscopic. The audio may be presented to a home cinema system in one of a number of formats such as stereo, 5.1 surround sound or 7.1 surround sound. Video and audio may likewise be presented to a head mounted display unit 120 worn by a user 1.

The entertainment device also comprises RAM 40, and may have separate RAM for each of the CPU and GPU, and/or may have shared RAM. The or each RAM can be physically separate, or integrated as part of an SoC. Further storage is provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment device is the head mounted display 'HMD' 120 worn by the user 1. The images output by the entertainment device may be displayed using various other devices - e.g. using a conventional television display connected to A/V ports 90.

Where components are not integrated, they may be connected as appropriate either by a dedicated data link or via a bus 100.

Interaction with the device is typically provided using one or more handheld controllers 130, 130A and/or one or more VR controllers 130A-L,R in the case of the HMD. The user typically interacts with the system, and any content displayed by, or virtual environment rendered by the system, by providing inputs via the handheld controllers 130, 130A. For example, when playing a game, the user may navigate around the game virtual environment by providing inputs using the handheld controllers 130, 130A.

Figure 1 therefore provides an example of a data processing apparatus suitable for executing an application such as a video game and generating images for the video game for display. Images may be output via a display device such as a television or other similar monitor and/or an HMD (e.g. HMD 120). More generally, user inputs can be received by the data processing apparatus and an instance of a video game can be executed accordingly with images being rendered for display to the user.

Rendering operations are typically performed by rendering circuitry (e.g. GPU and/or CPU) as part of an execution of an application such as computer games or other similar applications to render image frames for display. Rendering operations typically comprise processing of model data or other predefined graphical data to render data for display as an image frame.

A rendering process performed for a given image frame may comprise a number of rendering passes for obtaining different rendering effects for the rendered image frame. Examples of rendering passes for rendering a scene may include rendering a shadow map, rendering opaque geometries, rendering transparent geometries, rendering deferred lighting, rendering depth-of-field effects, anti-aliasing, rendering ambient occlusions, and scaling among others.

Figure 2a schematically illustrates an example method of rendering images for display using a rendering pipeline 200. An entertainment device such as that discussed with respect to Figure 1 may for example implement such a rendering pipeline. The rendering pipeline 200 takes data 202 regarding what is visible in a scene and if necessary performs a so-called z-cull 204 to remove unnecessary elements. Initial texture/material and light map data are assembled 212, and static shadows 214 are computed as needed. Dynamic shadows 222 are then computed. Reflections 224 are then also computed.

At this point, there is a basic representation of the scene, and additional elements 232 can be included such as translucency effects, and/or volumetric effects such as those discussed herein. Then any post-processing 234 such as tone mapping, depth of field, or camera effects can be applied, to produce the final rendered frame 240.

For generating volumetric effects, existing rendering pipeline techniques may generally use a volumetric simulation stage followed by a stage of sampling that samples the volumetric simulation. Rendering of volumetric effects, such as fog, smoke, steam, fire and so on typically require volumetric rendering approaches. The use of volumetric rendering for a scene may be desired for various reasons. However, rendering of scenes with realistic volumetric effects can be computationally expensive.

For convenience, the description herein may refer to 'fog' as a shorthand example of a volumetric effect, but it will be appreciated that the disclosure and techniques herein are not limited to fog, and may comprise for example other volumetric physical simulations, such as those of smoke, water, sand and other particulates such as in an avalanche or landslide, and fire.

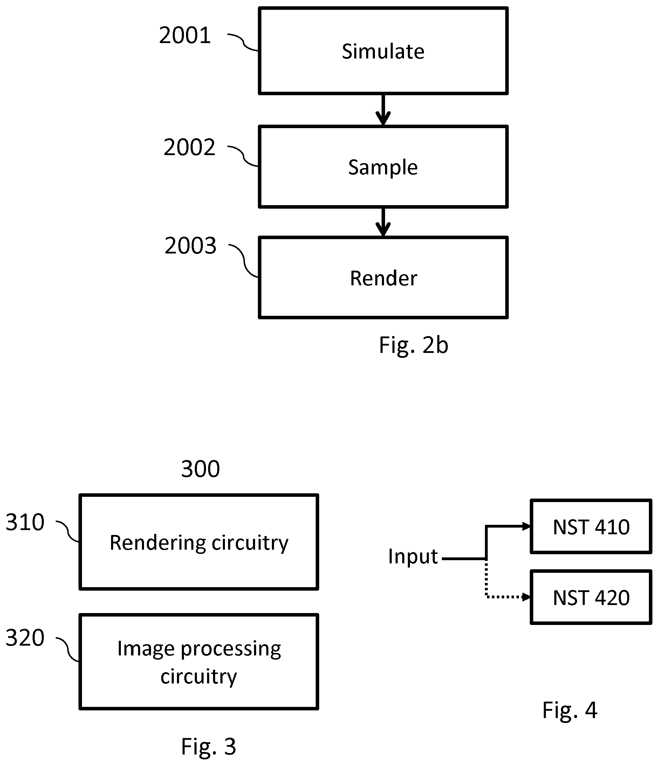

Figure 2b schematically illustrates an example method of operations for rendering images with a volumetric effect, such as a volumetric fog effect. The method comprises: performing (at step 2001) a volumetric simulation (e.g. volumetric fog simulation); performing sampling calculations (at a step 2002) to sample the volumetric simulation and obtain a set of sampling results (e.g. stored as a 3D texture); and rendering (at a step 2003) display images to include a volumetric effect based on the set of sampling results. The step 2003 may comprise various render passes for providing various rendering effects, in which a volumetric effect rendering pass (e.g. volumetric fog rendering pass) can be used.

The volumetric simulation may use any suitable algorithm. For example, fog particles may be simulated or instead a density of fog may be simulated. Interaction of light with the fog can be modelled (e.g. transmission, absorption and scattering of light). The volumetric simulation may be performed only for a portion of a scene that is visible (e.g. a portion of a game world currently within a field of view of a virtual camera). The sampling calculation then samples the volumetric dataset with the results being stored, for example as a 3D texture. Rendering operations can thus be performed to render one or more display images, in which the rendering operations use the results of the sampling and the display images depict the scene with a volumetric effect (e.g. volumetric fog effect).

Figure 3 schematically illustrates a data processing apparatus 300 in accordance with embodiments of the disclosure. The data processing apparatus 300 may be provided as part of a user device (such as the entertainment device of Figure 1) and/or as part of a server device. The data processing apparatus 300 may be implemented in a distributed manner using two or more respective processing devices that communicate via a wired and/or wireless communications link. For example, rendering operations may be performed by a first device (e.g. a server), whereas post-processing operation may be performed by a second device (e.g. user device). The data processing apparatus 300 may be implemented as a special purpose hardware device or a general purpose hardware device operating under suitable software instruction. The data processing apparatus 300 may be implemented using any suitable combination of hardware and software.

The data processing apparatus 300 comprises rendering circuitry 310 (e.g. CPU 20 and/or GPU 30) and image processing circuitry 320 (e.g. CPU 20 and/or GPU 30). The rendering circuitry 310 is configured to render content images for a virtual environment. The content images may correspond to any suitable content such as a video game or other similar interactive application. The rendering circuitry 310 can be configured to render content images according to any suitable frame rate and any suitable image resolution. In some examples, content images may be rendered with a frame rate of 30 Hz, 60 Hz or 120Hz or any frame rate between these possibilities. The content images may relate to 2D images suitable for being displayed by a television or other similar monitor device. Alternatively, the content images may relate to stereoscopic images for being displayed by an HMD. References herein to rendered content images refer to any of 2D images and stereoscopic images.

The rendering circuitry 310 is thus configured to render a plurality of content images for visually depicting a virtual environment (computer-generated environment). The virtual environment may correspond to a game world for a video game or other similar scene. In some examples, the virtual environment may correspond to a virtual reality (VR) environment which can be explored and interacted with by a user viewing the content images via a display device such as a head mountable displayed (HMD). Hence, in some cases the rendering circuitry 310 may be configured to render content images depicting a virtual reality environment for display by an HMD.

The rendering circuitry 310 renders content images comprising pixel values which may be RGB pixel values. For example, the content images may be 24-bit RGB images such that each pixel value has 24-bits with 8-bits per colour channel. Alternatively, another colour space may be used, such as YCbCr colour space.

The rendering circuitry 310 can be configured to render content images in accordance with a viewpoint position and/or orientation that may be controlled by a user. For example, a user may control a viewpoint with respect to a virtual environment using one or more of a handheld controller device (e.g. 130, 130A) and/or a tracked position and/or orientation of an HMD (e.g. 120). The rendering circuitry 310 can thus render the content images according to a user-controlled viewpoint. For example, the content images may have a viewpoint such as a first person viewpoint or a third person viewpoint for a virtual entity (e.g. virtual avatar or virtual vehicle) controlled by a user.

More generally, the rendering circuitry 310 can be configured to render content images in accordance with virtual viewpoint information, in which the virtual viewpoint information is indicative of at least one of a position and an orientation for a virtual viewpoint within a virtual environment. In some embodiments of the disclosure, the data processing apparatus 300 is configured to receive user input information for controlling at least one of a position and an orientation of the virtual viewpoint within the virtual environment. For example, the data processing apparatus may maintain virtual viewpoint information indicative of a position and orientation for a virtual viewpoint and update the virtual viewpoint information in response to user input information received from one or more user input devices, such as a handheld controller and/or an HMD. Hence, the content images may in some cases be rendered to provide a viewpoint with respect to a virtual environment for allowing a user to explore and move around the virtual environment.

The image processing circuitry 320 is configured to generate one or more output images in response to one or more of the content images. One or more content images generated by the rendering circuitry 310 is/are input to the image processing circuitry 320. The image processing circuitry 320 performs post-processing so as to generate one or more output images. The post-processing by the image processing circuitry 320 uses a neural style transfer (NST) model. The image processing circuitry inputs at least one two-dimensional (2D) volumetric effect image and one or more of the content images to the NST model. The NST model has been trained to generate the one or more output images using the at least one 2D volumetric effect image as a style image.

The least one 2D volumetric effect image may comprise one or more from the list consisting of: a fog effect, a smoke effect, a water effect, a mobile particles effect, a fire effect and a sand effect. Moreover, the NST model may use any of a fog image, smoke image, water image, mobile particle image, fire image and sand image as a style image.

The following discussion generally refers to techniques using fog images for allowing style transfer of fog for a content image to obtain an output image depicting a virtual scene including a fog effect. However, it will be appreciated that any of the techniques to be discussed below may be implemented using another 2D volumetric effect image other than a fog image (such as a smoke image or any of the other listed examples).

Neural style transfer (NST) models generally aim to generate a new image based on a content image and a style image. The aim of the style transfer is generally to obtain an output image that preserves the content of the content image while applying a visual style of the style image. The NST model comprises an artificial neural network (ANN) (implemented in hardware or software or a combination thereof) trained to generate at least one output image in dependence upon an input comprising at least one content image and at least one style image. The ANN may be a processor-implemented artificial neural network which may be implemented using one or more of: one or more CPUs, one or more GPUs, one or more FPGAs, and one or more deep learning processors (DLP).

Hence, potentially fog-free content images may be rendered by the rendering circuitry 310 and post-processed by the image processing circuitry 310 by inputting a content image to the NST model for generating an output image for depicting the virtual environment with fog, in which the NST model uses a fog image as the style image. Therefore, an output image including a volumetric effect can be obtained potentially without the need for complex processing operations associated with volumetric rendering.

In particular, volumetric rendering approaches (such as that discussed with respect to Figure 2b) typically involve sampling computer-generated volumetric effect data (e.g. a fog simulation) using a 3D grid (e.g. 3D grid of voxels or 3D grid of frustum-shaped voxels) to obtain a 3D set of sampling results which can be used for one or more rendering operations. In practice, the computational load associated with volumetric rendering may result in slow production of a TV show or film, or in adversely reducing frame rates. One solution to this problem is to model volumetric effects at a much lower resolution than a rendered image, to thereby reduce the computational overhead. However, low resolution sampling can produce a block and flickering appearance of the volumetric effect. On solution to this is to blend sampling results from a number of frames to smooth out an appearance. However, this can produce a smeary and low quality fog in the rendered images.

In the techniques of the present disclosure, the data processing apparatus 300 is operable output the output images including a volumetric effect without the need for complex processing operations associated with volumetric rendering. The above discussion with respect to Figure 3 refers to inputting a 2D volumetric effect image (e.g. a fog image) and a content image to the NST model. The volumetric effect image and the content image may be input to the NST model without being pre-processed or in some cases pre-processing of one or both of the images may be carried out prior to being input. The techniques of the present disclosure allow for integration with existing graphics processing pipelines and allow computationally efficient generation of output images with volumetric effects (e.g. fog effect).

In some embodiments of the disclosure, the rendering circuitry 310 may render content images without rendering a volumetric effect. Moreover, in some embodiments of the disclosure the rendering circuitry 310 may render content images without rendering a volumetric fog effect (so as to render "fog-free content images"). Hence, one or more of the content images may be fog-free content images. Therefore, rendering operations for rendering a volumetric fog effect, which can be computationally expensive (e.g. due to the use of volumetric rendering approaches), and even more so for cases in which realism and visual quality are of greater importance (such as for rendering of virtual reality content), can be omitted from the rendering operations performed by the rendering circuitry 310. Instead, post-processing using the NST model can be used for obtaining a fog effect in the content image. Moreover, the data processing apparatus 300 can provide output images for displaying a virtual environment with fog effects with improved computational efficiency and/or visual quality (e.g. visual realism and/or resolution) compared to traditional volumetric rendering techniques.

In some embodiments of the disclosure, the rendering circuitry 310 may render one or more content images by rendering a volumetric effect. Moreover, in some embodiments of the disclosure the rendering circuitry 310 may render one or more content images by rendering a volumetric fog effect for one or more of the content images. The rendering circuitry 310 may perform rendering operations comprising one or more volumetric fog rendering operations to render one or more of the content images to include a fog effect. For example, processing similar to that discussed previously with respect to Figure 2b may be performed to simulate fog, sample the fog and render a volumetric fog effect. As mentioned previously, rendering of volumetric effects, such as a volumetric fog effect, can be particularly challenging. Moreover, in order to obtain results of a suitable quality (e.g. visual realism and/or resolution) this can potentially require burdensome processing.

Hence, in some embodiments of the disclosure one or more of the rendered content images may include fog, which may be rendered with a low computational budget (e.g. any of a low quality simulation, low quality sampling and/or low render resolution) to provide a rendered fog which is generally of low quality. One or more such content images can be input to the NST model for style transfer using a fog image as the style image. The presence of fog effects within a content image can serve as a guide for the NST model. In particular, the NST model can apply the style transfer to a given content image using the fog effects within that given content image as a guide for the style transfer and thereby generate an output image including fog with improved quality relative to that in the content image.

For example, a content image may be rendered to include fog with a variable density. In particular, the fog in the content image may be patchy with abrupt transitions between regions (or even pixels) of high fog density and low fog density or even no fog. For example, volumetric rendering techniques whereby a simulated fog dataset is sampled to create a 2D or 3D image texture can potentially result in the sampling calculation sampling high density fog for one pixel or voxel or region (e.g. group of pixels or voxels) and sampling no or low density fog for an adjacent pixel, voxel or region. Such a situation may arise from using a low resolution sampling calculation (e.g. a low resolution 3D grid, such as a low resolution froxel grid) to sample a higher resolution 3D fog simulation. This can potentially lead to a flickering effect when viewing a sequence of rendered content images, in that fog may be present at a pixel/region for one image frame and not present at that pixel/region for a next image frame (or fog density may vary greatly for that pixel/region from one image frame to the next image frame). Some volumetric rendering approaches may attempt to overcome this problem by blending sampling results for a number of image frames. For example, for a current image frame, the sampling results may be blended with sampling results from a predetermined number of preceding image frames. In this way, the above mentioned flickering effect may be overcome however this can result in a low quality fog with poor temporal coherence due to smearing of information from multiple earlier image frames.

Hence, in some embodiments of the disclosure, the rendering circuitry 310 may render one or more content images by rendering a volumetric fog effect for one or more of the content images. In response to inputting the content image to the NST model, the style transfer can be performed using some of the already present fog for the content image so as to provide a guide for the fog-based style transfer. For example, a content image may be rendered to include a lower density fog in a first portion of the content image and a higher density fog in a second portion of the content image. The NST model can generate an output image comprising a lower density fog in the first portion of the output image and a higher density fog in the second portion of the output image and for which the style transfer results in improved quality (e.g. visual realism and/or resolution) of the fog in the output image. For example, using the fog image as the style image, the output image may be generated so that a transition between the lower density fog and the higher density fog in the output image has improved quality relative to the content image (e.g. a more gradual and realistic transition of fog density).

More generally, by rendering one or more content images to include fog effects, the fog already present in a content image may serve as a guide for the style transfer by the NST model when using a fog image as the style image. For example, the location and/or density of fog in a content image can assist in controlling the style transfer to control location and/or density of fog for the output image.

In some examples, a sequence of content images may be rendered each including fog effects (e.g. a fog animation may be visually depicted in the sequence) and the NST model may use a same fog image as the style image for the sequence of content images. In this way, the output images may depict the virtual environment with an animated fog whilst potentially using a single fog image depicting a same (static) fog as the style image. This is discussed in more detail later.

The above discussion refers to the possibility of the rendering circuitry 310 being operable to render one or more content images including a volumetric fog effect. For clarity of explanation, the following discussion will generally refer to arrangements in which the rendering circuitry 310 renders content images that are fog-free (or more generally volumetric effect free). However, it will be understood that references in the following discussion to content images rendered by the rendering circuitry 310 may refer to any of content images that are fog-free (rendered without rendering a fog effect) and content images that include fog.

As explained above, in embodiments of the disclosure the NST model has been trained to generate one or more output images in response to one or more content images, in which the NST model generates the one or more output images using at least one 2D volumetric effect image (e.g. fog image) as a style image. A 2D volumetric effect image comprises pixel data for representing a volumetric effect. For example, a 2D volumetric effect image may be in the form of a fog image comprising pixel data for representing a fog effect. In some cases, a fog image may be a fog map including pixel values for representing only fog without an underlying scene. In other cases, a fog image may include both fog and also an underlying scene which may be a virtual scene or a real-world scene.

The NST model may use, as a style image, a fog image that may be a fog map including pixel values for indicating presence or absence of fog for each pixel. For example, the fog map may include pixels each having a pixel value of 1 or 0 for indicating presence or absence of fog, respectively (or vice versa). Hence, presence or absence of fog can be specified for each pixel in the fog map and used for style transfer. The NST model may be trained to use the fog map with the content image to preserve the content of the content image while applying the style of the fog map to obtain an output image including a virtual environment with fog. In some examples, fog map may include pixels having a value of 1 or 0 and also a transparency value (e.g. an alpha value between 0 and 1) for indicating a transparency for the pixel. In some examples, the fog map may include pixels each having a pixel value for specifying a greyscale value. In some examples, the fog map may include pixels each having a pixel value for specifying a colour and also transparency (e.g. RGBA pixel values). For example, in the case of an RGBA format, different shades of white, off-white and grey can be specified as well as transparency for each pixel. Any of the above mentioned fog maps may be created (e.g. using offline processing) based on a computer-generated fog and sampling thereof. For example, a volumetric fog simulation may be performed and sampled to create a 2D fog map.

In some cases, the NST model may use, as a style image, a fog image that is a captured image comprising a real world scene including real fog. An image captured of a real scene including fog may be used as a style image by the NST model. This can be useful in that a real scene including fog can be used for the style transfer. Alternatively or in addition, the NST model may use a fog image that is a computer-generated image comprising a virtual scene (computer generated scene) including pixel values for a computer generated fog.

Hence more generally, in some embodiments of the disclosure the NST model can be configured to use one or more fog images as a style image, in which the one or more fog images may comprise one of more of: a captured fog image comprising a real world scene including real fog; a computer generated fog image comprising pixel values for computer-generated fog (e.g. a fog map), and a computer-generated fog image comprising a virtual scene including computer generated fog.

The use of a captured image comprising a real world scene including real fog as a style image can be useful in that such images will necessarily include realistic fog. The use of a captured image can allow style transfer to produce an output image with realistic fog. Alternatively or in addition, the NST model may use a computer-generated image as a style image. A computer-generated image may be obtained using any suitable fog simulation and sampling. In some cases, a computer-generated image may include both a virtual scene and a computer-generated fog. Such an image may be manually created by a developer so as to create a respective image with high quality fog for a scene.

In some cases, inputting of a given content image and a style image to the NST model may potentially result in style transfer with reduced levels of control over the location and/or density of the volumetric effect in the resulting output image. For example, for a content image depicting a first type of scene (e.g. forest scene) and a fog image depicting a second type of scene (e.g. beach scene) with fog, the style transfer may result in an output image with unrealistic fog effects. The techniques of the present disclosure provide a number of possibilities for improving control for a volumetric effect in the output images. In particular, the techniques of the present disclosure provide a number of possibilities for improving control for a volumetric fog effect.

As explained previously, in some embodiments of the disclosure the rendering circuitry 310 may in fact render one or more content images to include volumetric fog (low quality volumetric fog). The fog effect present in a given content image may serve as a guide for the style transfer by the NST model. For example, fog already present in a given content image can be used to control a location and/or density for the style transfer, whilst the style image includes fog with visual realism so as to assist in in achieving fog with visual realism for those locations in the output image.

Alternatively or in addition, in some embodiments of the disclosure the image processing circuitry 320 may select at least one fog image from a plurality of candidate fog images in dependence on one or more properties associated with one or more of the content images. The NST model is operable to use the selected fog image(s) as a style image for obtaining one or more output images. A plurality of candidate fog images can be available for being selected by the image processing circuitry 320. One or more properties associated with one or more content images can be identified and used for selecting at least one fog image from the plurality of candidate fog images. In this way, for one or more content images, the image processing circuitry 320 can advantageously select a fog image that is suited to the one or more content images for being used as a style image by the NST model.

The image processing circuitry 320 may detect various properties for a given content image based on one or more of pixel value analysis and computer vision techniques. For example, analysis of pixel values may be used to detect an image brightness for a content image. Computer vision techniques may be used to detect objects (e.g. object type) included in a content image and/or a classify a content image based on scene type. Hence more generally, the image processing circuitry 320 can analyse a content image to detect at least one property for the content image and on this basis a selection of at least one fog image for use as a style image can be performed so that the NST model uses a fog image that is suitable for the at least one property.

In some embodiments of the disclosure, the image processing circuitry 320 is configured to detect one or more properties associated with a given content image, in which the one or more properties comprise one of more from the list consisting of: a scene type, a light source type and an image brightness associated with the content image. The image processing circuitry 320 may comprise a scene classifier model for classifying a scene in the content image. Alternatively or in addition, the image processing circuitry 320 may comprise an object recognition model for detecting object types in the content image. Alternatively or in addition, the image processing circuitry 320 may be operable to analyse pixel values and calculate an image brightness for the content image and/or classify the content image according to an image brightness classification from a plurality of image brightness classifications. The scene classifier model and object recognition model may use known machine learning techniques for such detection. Such computer vision techniques are known. The image processing circuitry 320 may calculate a scalar value indicative of an image brightness for a content image based on analysis of pixel values and/or may determine an image brightness classification (e.g. high image brightness, medium image brightness, low image brightness). It will be appreciated that any suitable number of image brightness classifications may be used in this way.

Generally, appearance of fog is expected to differ for different types of scenes, different types of light sources (e.g. whether a scene is under sunlight, moonlight, streetlights, shaded etc.) and/or different image brightness. Therefore, in some embodiments of the disclosure, the image processing circuitry 310 can be configured to select at least one fog image, to be used as a style image, in dependence upon detection of at least one of a scene type, a light source type and an image brightness associated with one or more of the content images. In this way, a fog image (e.g. a fog map, captured image including a real scene and real fog, and/or a computer-generated image comprising a virtual scene and computer generated fog) comprising fog that is suited to one or more of the scene type, light source type and image brightness can be selected for use as a style image.

In some embodiments of the disclosure, at least some of the plurality of candidate fog images are each associated with at least one of a different scene type, a different light source type and a different image brightness. For example, the plurality of candidate fog images may comprise one or more first fog images each depicting a real-world scene including real fog. The first fog images may comprise a number of different scene types such as a forest scene, mountain scene, beach scene, urban scene, meadow scene and so on. It will be appreciated that a broader or narrower classification of scene type may be implemented as desired. Similarly, the plurality of candidate fog images may comprise one or more second fog images each depicting a virtual scene including computer generated fog. The second fog images may comprise a number of different scene types. Similarly, the plurality of candidate fog images may comprise one or more third fog images obtained by sampling a fog simulated for a number of different scene types. Fog simulations may be performed for different scene types (e.g. using a game engine such as the Unreal^{®} game engine) and sampled.

The above discussion refers to candidate fog images being associated with different scene types. Alternatively or in addition, one or more candidate fog images may be associated with different light source types. For example, a candidate fog image may be associated with a light source type such as the sun, while another candidate fog image may be associated with a light source type such as the moon or a street light. For example, in the case of grayscale values ranging from 0-255 with 0 corresponding to black and 255 corresponding to white, for a same virtual scene (e.g. an urban scene), a sunlit fog can be expected to have pixel values indicative of higher grayscale values whereas a moonlit fog can be expected to have pixel values indicative of lower grayscale values. More generally, appearance of fog can be expected to differ for different types of light source. In a similar manner candidate fog images may be associated with different image brightness.

The above discussion refers to candidate fog images being associated with least one of a different scene type, a different light source type and a different image brightness. Each candidate fog image may have associated metadata indicative of at least one of a scene type, light source type and image brightness. In this way, in response to the image processing circuitry detecting a scene type, light source type and/or image brightness for a content image, at least one candidate fog image having a matching scene type, light source type and/or image brightness can be selected for use as the style image for that content image.

Hence, the image processing circuitry 310 may detect one or more of scene type, light source type and image brightness for a content image, and select at least one fog image that is associated with a same scene type, light source type and/or image brightness. In this way, a fog image for one or more of a matching scene type, matching light source type and/or matching image brightness (e.g. matching image brightness classification) can be selected. Therefore, an appearance of the fog effect represented by the selected fog image can be suited to an appearance of fog effect required for the content image.

The plurality of candidate fog images may be defined in advance and each labelled with metadata indicative of a scene type, one or more light source types and/or an image brightness (e.g. image brightness classification). Hence, in response to detection of one or more properties for a given content image, a look-up can be performed with respect to the plurality of candidate fog images to select one or more fog images.

More generally, the image processing circuitry 310 may select at least one fog image, to be used as a style image, from a plurality of candidate fog images in dependence on one or more properties associated with a content image, in which the selected fog image is associated with one or more properties that match one or more of the properties associated with the content image. Property matching of a fog image and a content image in this way can improve quality of the fog effect for the output image.

Moreover, in some cases neural style transfer using a style image for a first scene type and a content image for a second scene type can potentially result in visual artefacts in the resulting output image. This may arise from parts of a scene in the style transfer image being transferred erroneously. By using a style image and a content image having a same scene type, the presence of such visual artefacts can be at least reduced or removed for the resulting output image.

Alternatively or in addition, in some embodiments of the disclosure at least some of the plurality of candidate fog images may be associated with a different fog visibility. Similar to what has been discussed above, metadata associated with a candidate fog image may be indicative of a fog visibility associated with that candidate fog image (e.g. a fog visibility classification from a plurality of different fog visibility classifications).

The plurality of candidate fog images may comprise a fog image associated with a first fog visibility and another fog image associated with a second fog visibility different from the first fog visibility. More generally, the plurality of candidate fog images may comprise a plurality of respective fog images associated with a plurality of different fog visibilities. A lower fog visibility is characterised by thicker fog, whereas a higher fog visibility is characterised by thinner fog. The fog images may have pixel values for specifying colour and transparency (e.g. RGBA values indicative of red, green, blue and alpha values), in which a fog image associated with a lower fog visibility has a lower transparency (e.g. larger alpha (A) values for the pixels) and a fog image associated with a higher fog visibility has a higher transparency (e.g. smaller alpha (A) values for the pixels).

Therefore, the rendering circuitry 310 can render content images, and the image processing circuitry 320 can input at least one content image and a fog image to the NST model for generating an output image, in which the fog image can be selected by the image processing circuitry 320 in dependence on a target fog visibility for the content image. The target fog visibility may be specified by an interactive application (e.g. game application) or game engine. For example, a game engine may generate a signal indicative of a target fog visibility for one or more content images. More generally, the image processing circuitry 310 can receive a signal indicative of a target fog visibility, from any of a game engine and/or the rendering circuitry 310, and select a fog image having a given fog visibility in dependence upon the target fog visibility.

Selection of a fog image in dependence upon a target fog visibly may be performed in a number of ways. The target fog visibility may be defined as a transparency value (e.g. an alpha value between 0 and 1), for allowing selection with respect to the candidate fog images. A comparison of a target transparency value and transparency values associated with each of a plurality of candidate fog images may be performed to select a fog image. For example, an average (e.g. mean, mode or median) transparency value for each of a plurality of candidate fog images may be compared with the target transparency value to select a fog image having a smallest difference with respect to the target transparency value.

Alternatively or in addition, at least some of the candidate fog images may be assigned a visibility level from a predetermined number of visibility levels (e.g. high visibility, medium visibility, low visibility). Similarly, the target fog visibility may be defined as a respective visibility level. Hence, a fog image may be selected having a same visibility level as the target fog visibility.

In some cases, the target fog visibility may be defined in terms of a visibility distance in a virtual environment (e.g. a depth at which a scene is to be fully obscured by the fog). In some examples, a conversion between visibility distance in a virtual environment and alpha values or a visibility level may be used to convert the target fog visibility to an alpha value or a visibility level which can then be used for the selection according to the techniques discussed above.

Hence more generally, the image processing circuitry 320 can input a content image and a fog image to the NST model for generating an output image, in which the fog image can be selected in dependence upon a target fog visibility. In this way, a fog visibility for the output image can be controlled.

The rendering circuitry 310 may render a sequence of content images (having any suitable frame rate), and a fog visibility for the resulting output images can be varied by varying a fog image used as the style image, so that output images with a first fog visibility can be generated during a first period of time and output images with a second fog visibility can be generated during a second period of time. For example, a user may move a virtual entity (e.g. virtual avatar) within a virtual environment to approach and enter a fog and a fog image to be used as a style image can be varied in response to changes in the target fog visibility (e.g. requested by a game engine and/or the rendering circuitry 310).

The above discussion refers to arrangements in which a style image used by the NST model can be controlled accordingly for one or more content images.

Alternatively or in addition, in some embodiments of the disclosure the image processing circuitry 320 can be configured to select an NST model from a plurality of NST models, each of the plurality of NST models having been trained for style transfer for at least one of a different scene type, a different light source type and a different image brightness for a content image. For example, a first NST model may have been trained for a first type of scene (e.g. a forest scene) and a second NST model may have been trained for a second type of scene (e.g. an urban scene). The image processing circuitry 320 can be configured to detect a scene type for a content image. In response to detection of the scene type, the image processing circuitry 320 can be configured to input the content image to a given NST model selected from the plurality of NST models, in which the given NST model has been trained for that scene type. In a similar manner, detection of light source type (e.g. detection of an object such as a virtual lamp, virtual sun or virtual moon) and/or detection of image brightness for a content image may be used for selection of an NST model.

Figure 4 schematically illustrates an example in which the image processing circuitry 320 comprises two NST models, shown as NST model 410 and NST model 420. The image processing circuitry 320 is capable of inputting content images to either of the two NST models (schematically represented by the dotted line). As shown in Figure 4, the image processing circuitry 320 has selected NST model 410 and inputs the content images to NST model 410 (schematically represented by the solid line).

For example, NST model 410 may have been trained for style transfer for urban scene types, whereas NST model 420 may have been trained for style transfer for forest scene types (or another scene type). Hence, in response to detection of an urban scene type for one or more content images, the image processing circuitry 320 inputs the one or more content images to the NST model 410 for generating output imaged.

Figure 4 schematically illustrates an example in which the image processing circuitry 320 comprises two NST models. It will be appreciated that the image processing circuitry 320 may comprise two or more NST models and the principles discussed with respect to Figure 4 may be performed using one or more of detected scene type, light source type and image brightness so as to select an NST model for one or more current properties of the content images.

The image processing circuitry 320 may comprise a plurality of NST models. The plurality of NST models may each have been trained for style transfer using fog images as a style image. Each of the plurality of NST models may have been trained for style transfer for at least one of a different scene type, a different light source type and a different image brightness for a content image. A set of training images comprising images of a same scene type with and without a volumetric effect (e.g. with and without a fog effect) may be used for training respective NST models.

For example, backpropagation training techniques may be used in which a reference image including a fog effect is used as ground truth data. A backpropagation training method may comprise: inputting an image without a fog effect and a style image including the fog effect to an NST model; generating by the NST model an output image using the input image and the style image; calculating error information according to differences between the output image and the reference image including the fog effect; and updating parameters for the NST model in dependence on the error information. These steps may be repeated until a certain training condition is met. For example, the training condition may be met in response to the error information being indicative of a difference between the output image and the image including the fog effect that is less than a threshold, and/or in response to a change in the error information between successive iterations and/or over a predetermined period of time being less than a threshold. More generally, the steps of the training method can be repeated to achieve convergence towards a set of learned parameters for the NST model.

In some examples, a set of training data for training an NST model comprises image pairs for a same scene including a volumetric effect (e.g. fog) and without the volumetric effect (e.g. without fog). Captured image pairs of real world scenes may be used. However, there may be limited availability of such data. Alternatively or in addition, the set of training data may comprise computer-generated image pairs generated by performing offline computer simulations for scenes to simulate the scenes with and without a volumetric effect. In this way, an appearance of a given scene with and without the volumetric effect can be used for training the NST model.

In some embodiments of the disclosure, an NST model comprises a generative neural network trained to generate a respective output image using a respective content image and at least one 2D volumetric effect image as the style image. In some cases, the generative neural network may have been trained using one or more of the above mentioned sets of training data to learn a set of parameters for performing neural style transfer using style images associated with a respective type of volumetric effect (e.g. fog).

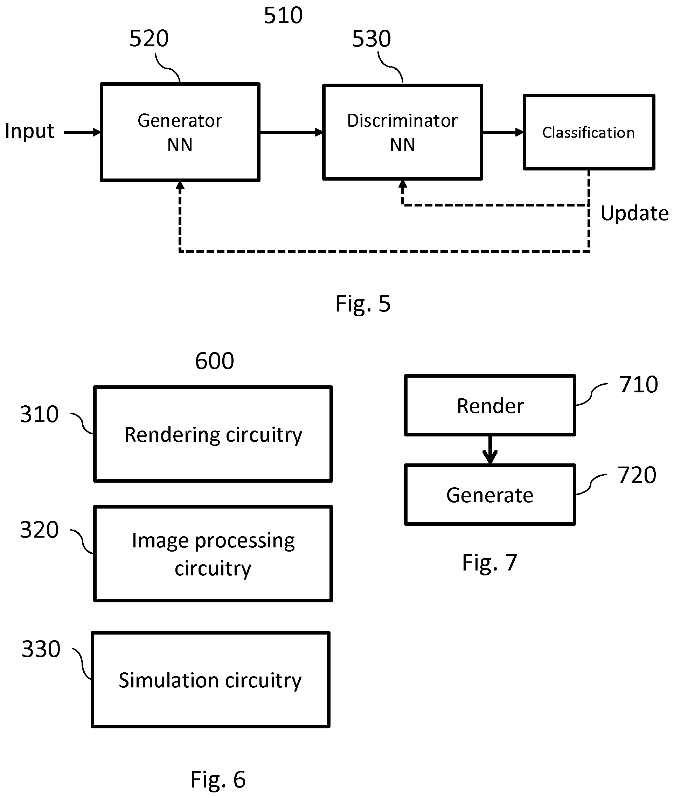

Referring now to Figure 5, in some embodiments of the disclosure an NST model 510 comprises a generative adversarial network (GAN) comprising a generative neural network 520 and a discriminator neural network 530. The generative neural network 520 receives an input comprising a content image for a virtual scene and a 2D volumetric effect image (e.g. fog image) to be used as a style image. The generative neural network 520 generates an output image in dependence on the content image and the 2D volumetric effect image. The output image thus depicts the virtual scene with the volumetric effect (e.g. fog effect). The output image is input to the discriminator neural network 530 which classifies the output image as being either a fake image that is generated by the generative neural network 520 or a real image. The discriminator neural network 530 can be trained using training data comprising images of scenes including the volumetric effect so as to classify output images generated by the NST model as being one of fake images generated by the NST model and real images. Based on classification by the discriminator neural network 530, at least one of the generative neural network 520 and the discriminator neural network 530 can be updated.

Generally, the aim of training of the GAN is for the generative neural network 520 to fool the discriminator neural network 530 into classifying an output image generated by the generative neural network 520 as being real data (not generated by the generative neural network 520). Generally, if the discriminator neural network 530 repeatedly classifies the output images as being fake, then the generative neural network 520 should be updated in a way that the discriminator neural network 530 classifies subsequently generated output images as being real data. Subsequent to this, once the output images are sufficiently realistic so as to fool the discriminator neural network 530, then the discriminator neural network 530 should be updated in a way that the discriminator neural network 530 classifies subsequently generated output images as being fake. Training of the training network and the discriminator in such an adversarial manner can potentially allow generating of output images with enhanced quality and visual realism.

One benefit to using the GAN is that training data including just scenes with a volumetric effect can be used. Moreover, using the GAN can potentially avoid the need for training data comprising images for scenes both with and without volumetric effects. In particular, the generative neural network 520 can be trained in the manner discussed above to attempt to fool discriminator neural network 530, and the discriminator neural network 530 can be trained using or more of: captured images comprising real world scenes including real volumetric effects; and computer-generated images comprising virtual scenes including simulated volumetric effects. More generally, images with highly realistic volumetric effects can be used for training the discriminator such that the discriminator will correctly classify output images from the generative neural network 520 as being fake, until a point at which the generative neural network 520 generates output images are sufficiently realistic so as to fool the discriminator neural network 530.

Of course, while the content images relate to a virtual scene, training of the discriminator using captured images including real-world scenes may be problematic in that the discriminator may always classify the output images as being fake. In some examples, the captured images may be pre-processed to generate a geometric representation for the real world scene with the volumetric fog. For example, the captured images may be pre-processed to extract information regarding locations and densities of fog, and may also convert the scene to a line black and white line drawing. Similarly output images generated by the generative neural network 520 may be subjected to the same processing prior to being input to the discriminator. Alternatively or in addition, the captured images may be converted to grayscale images for use in training, and similarly output images generated by the generative neural network 520 may be converted to grayscale images prior to being input to the discriminator.

In the case where the training of the discriminator uses computer-generated images comprising virtual scenes including simulated volumetric effects, the computer-generated images may have been subjected to a quality assurance (QA) process whereby one or more real users rate computer-generated images according to a degree of realism, and computer-generated images having at least a threshold rating (i.e. threshold degree of realism as rated by the one or more users) are included in the training data.

In some embodiments of the disclosure, the data processing apparatus 300 may comprise selection circuitry to selectively input content images to the image processing circuitry 320. For example, when a volumetric effect (e.g. volumetric fog) is to be added to the content images, each content image can be input to the image processing circuitry 320. In cases in which the volumetric effect is not required, the image processing circuitry 320 may be by-passed with content images being output for display without being post-processed by the image processing circuitry 320. Optionally, the image processing circuitry 320 may also provide other post-processing possibilities in addition to fog.

In some embodiments of the disclosure, the image processing circuitry 320 can be configured to generate a sequence of output images in response to an input sequence of content images, each output image corresponding to a respective content image. The rendering circuitry 310 may render a sequence of content images having any suitable frame rate (e.g. N Hz). Each content image may be input to the image processing circuitry 320 for generating a corresponding output image. The image processing circuitry 320 may thus generate output images with a same frame rate (N Hz). Hence, content images rendered by the rendering circuitry 310 can be post-processed in real-time to obtain output images including the volumetric effect associated with the 2D volumetric effect image used as the style image.

In some embodiments of the disclosure, the image processing circuitry 320 is configured to generate each output image of a sequence of output images using a same respective 2D volumetric effect image. For example, a single fog image may be used by the NST model for post-processing a plurality of content images to generate a plurality of output images. Put differently, a plurality of content images corresponding to a period of time (e.g. of the order of seconds or even minutes) may be input to the NST model and each post-processed using a same respective fog image to obtain a sequence of output images styled based on the same respective fog image.

In some embodiments of the disclosure, the image processing circuitry 320 can be configured to input a time-varying control signal to the NST model for animation of a volumetric effect depicted in the sequence of output images. For example, a same fog image may be used for multiple content images and the time-varying control signal may be used for allowing animation of fog depicted in the sequence of output images.

The time-varying control signal may be used by NST model to achieve animation of the volumetric effect in the output images in a number of ways. The time-varying control signal may be used together with a fog image. Hence a location and/or density of fog in the output images may be controlled responsive to the time-varying control signal. In some cases, the time-varying control signal may be used to apply animation to a respective fog image. The varying control signal may be used to apply updates to location and/or densities for fog in the respective fog image and updated versions of the fog image may be used as the style image by the NST model.

In some embodiments of the disclosure, the image processing circuitry 320 is configured to input a sequence of 2D volumetric effect images (e.g. sequence of fog images) depicting an animation and the plurality of content images to the NST model to generate the sequence of output images. Hence, both a sequence of content images and a sequence of 2D volumetric effect images may be input to the NST model. A frame rate associated with the sequence of content images may be the same as or different from a frame rate associated with the sequence of 2D volumetric effect images. In some examples, the two frame rates may be the same such that there is a 1:1 correspondence between content images and 2D volumetric effect images. Put differently, for each of the content images, a different 2D volumetric effect image may be used by the NST model as the style image. In some examples, the two frame rates may be different. For example, the frame associated with the content images may be N Hz and the frame rate associated with the 2D volumetric effect images may be M Hz, where M is smaller than N. For example, the content images may have a frame rate of 60 Hz and the 2D volumetric effect images may have a frame rate of 30 Hz such that a same 2D volumetric effect image is used for two successive content images (i.e. a 1:2 correspondence).

The sequence of 2D volumetric effect images may be a sequence of fog images. For example, the fog image sequence may comprise a sequence of captured images comprising a real world scene including real fog. For example, a video recording of a real world scene with real fog may be used. Alternatively, the fog image sequence may comprise a sequence of computer generated images comprising pixel values for computer-generated fog. For example, a sequence of fog maps (as described previously) may be input to the NST model. Alternatively, the fog image sequence may comprise a sequence of computer-generated images comprising a virtual scene including computer generated fog.

Hence more generally, a fog image sequence may be input to the NST model to be used by the NST model as a style image sequence for generating a sequence of output images.

Referring now to Figure 6, in some embodiments of the disclosure a data processing apparatus 600 comprises the rendering circuitry 310, the image processing circuitry 320 (which have been discussed previously) and simulation circuitry 330 for generating a volumetric effect simulation.

In some embodiments of the disclosure, the simulation circuitry 330 may simulate volumetric effect data for a virtual environment. The simulation circuitry 330 and/or the rendering circuitry 320 can be configured to sample the simulated volumetric effect data and generate a sequence of 2D volumetric effect images in dependence on the sampled volumetric effect data, in which each 2D volumetric effect image comprises pixel values each specifying colour and optionally transparency (e.g. RGBA values). In this way, a sequence of 2D volumetric effect images (e.g. 2D fog maps) can be generated by the data processing apparatus 300 for use by the NST model as style images.

For example, the simulation circuitry 330 may simulate volumetric fog data. The sampling of the volumetric fog data may use a 3D grid. A voxel grid comprising voxels each of a same shape and size may be used to obtain a set of 3D sampling results comprising positional coordinates (e.g. x, y, z) and colour values (e.g. RGB values) for each position coordinate. In some examples, transparency (alpha values) may also be sampled so as to obtain RGBA values for each voxel. In some examples, a view frustum voxel grid (also referred to as a froxel grid) comprising frustum voxels may be used for the sampling. The use of such a froxel grid can be beneficial in that frustum-shaped voxels contribute to achieving better spatial resolution for part of a virtual scene closer to a virtual camera position. For the view frustum voxel grid (froxel grid), frustum voxels are aligned with a virtual camera viewpoint for a virtual scene and the frustum voxels fit within the view frustum of the virtual camera.

The sampling of the volumetric fog data may be performed at any suitable frame rate to obtain frames of 3D sampling results. For example, sampling may be performed at a frame rate of 30 Hz so as to generate a corresponding sequence of 2D volumetric effect images with a frame rate of 30 HZ.

Using a set of 3D sampling results, a 2D fog map comprising pixel values indicative of RGB (or RGBA) values can be generated. For example, a 3D voxel grid (or froxel grid) having individual slices of WxH (where W and H are numbers of voxels/froxels in the width and height axes, respectively) and a number of slices D in a depth axes may be used for the sampling. A 2D fog map is generally obtained as a projection of the sampling results onto a 2D image plane for a virtual camera viewpoint. For example, sample results corresponding to a same voxel for each of the different depth slices can be combined to obtain a respective result for a respective pixel in the 2D volumetric effect image. Moreover, sample results for each voxel/froxel in a same column of voxels/froxels extending from the virtual viewpoint in the depth axes can be combined to obtain a respective pixel value in the 2D volumetric effect image. For example, a weighting may be used to combine the sample results, with larger weightings being used for voxels/froxels closer to the virtual viewpoint and smaller weightings being used for voxels/froxels further from the virtual viewpoint.

Alternatively or in addition to the above, an equivalent to the 2D volumetric effect image for use by the NST model as a style image may be derived from the actual scene image; e.g. an RGB image of the scene with fog. The fog map would be an intermediate masked representation of the fog in the scene, indicating where the fog is present and at what intensity. The image may be resampled as required to act as the style image. Hence the actual image (with any suitable pre-processing such as down-sampling) can be used for style transfer.

Figure 7 is a schematic flowchart illustrating a method in accordance with embodiments of the disclosure. The method comprises:
rendering (at a step 710) content images for a virtual environment; and
generating (at a step 720) one or more output images in response to one or more of the content images, wherein generating one or more output images comprises inputting at least one 2D volumetric effect image and one or more of the content images to a neural style transfer (NST) model, the NST model being trained to generate the one or more output images using the at least one 2D volumetric effect image as a style image.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

It will also be apparent that numerous modifications and variations of the present disclosure are possible in light of the above teachings. It is therefore to be understood that within the scope of the appended claims, the disclosure may be practised otherwise than as specifically described herein.

## Claims

1. A data processing apparatus comprising:
rendering circuitry to render content images for a virtual environment; and
image processing circuitry to generate one or more output images in response to one or more of the content images, wherein the image processing circuitry is configured to input at least one 2D volumetric effect image and one or more of the content images to a neural style transfer "NST" model, the NST model being trained to generate one or more of the output images using the at least one 2D volumetric effect image as a style image.

2. The data processing apparatus according to claim 1, wherein the at least one 2D volumetric effect image comprises one or more of a captured fog image comprising a real world scene including real fog, a computer generated fog image comprising pixel values for computer-generated fog, and a computer-generated fog image comprising a virtual scene including computer generated fog.

3. The data processing apparatus according to claim 1 or claim 2, wherein the at least one 2D volumetric effect image is a fog image, and the image processing circuitry is configured to select the at least one fog image from a plurality of candidate fog images in dependence upon one or more properties associated with one or more of the content images; preferably wherein the image processing circuitry is configured to select the at least one fog image in dependence upon detection of at least one of a scene type, a light source type and an image brightness associated with one or more of the content images.

4. The data processing apparatus according to claim 3, wherein at least some of the plurality of candidate fog images are each associated with at least one of a different scene type, a different light source type and a different image brightness.

5. The data processing apparatus according to claims 3 or 4, wherein at least some of the plurality of candidate fog images are each associated with a different fog visibility, and the image processing circuitry is configured to select the at least one fog image in dependence upon a target fog visibility for one or more of the content images.

6. The data processing apparatus according to any preceding claim, wherein the NST model comprises a generative neural network trained to generate a respective output image using a respective content image and the at least one 2D volumetric effect image as the style image.

7. The data processing apparatus according to claim 6, wherein the NST model comprises a generative adversarial network "GAN" comprising the generative neural network and a discriminator neural network trained using training data comprising images of scenes including fog so as to classify output images generated by the NST model as being one of fake images generated by the NST model and real images; preferably wherein the discriminator neural network has been trained using one or more of:
captured images comprising real world scenes including real volumetric effects; and
computer-generated images comprising virtual scenes including simulated volumetric effects.

8. The data processing apparatus according to any one of claims 1 to 6, wherein the image processing circuitry is configured to select the NST model from a plurality of NST models, each of the plurality of NST models having been trained for style transfer for at least one of a different scene type, a different light source type and a different image brightness for a content image.

9. The data processing apparatus according to any preceding claim, wherein the image processing circuitry is configured to generate a sequence of output images in response to an input sequence of content images, each output image corresponding to a respective content image.

10. The data processing apparatus according to claim 9, wherein the image processing circuitry is configured to generate each output image of the sequence of output images using a same respective 2D volumetric effect image.

11. The data processing apparatus according to claim 10, wherein the image processing circuitry is configured to input the plurality of content images to the NST model and also input a time-varying control signal to the NST model for animation of the volumetric effect depicted in the sequence of output images.

12. The data processing apparatus according to claim 9, wherein the image processing circuitry is configured to input a sequence of 2D volumetric effect images depicting a volumetric effect animation and the plurality of content images to the NST model to generate the sequence of output images.

13. The data processing apparatus according to claim 12, comprising simulation circuitry to simulate volumetric effect data for the virtual environment, sample the volumetric effect data, and generate the sequence of 2D volumetric effect images in dependence on the sampled volumetric effect data, each 2D volumetric effect image comprising pixel values for specifying colour and transparency.

14. A computer implemented method comprising:
rendering content images for a virtual environment; and
generating one or more output images in response to one or more of the content images, wherein generating one or more output images comprises inputting at least one 2D volumetric effect image and one or more of the content images to a neural style transfer "NST" model, the NST model being trained to generate one or more of the output images using the at least one 2D volumetric effect image as a style image.

15. Computer software which when executed by a computer causes the computer to perform the method according to claim 14.
